# EUROPÄISCHE PATENTSCHRIFT

(11) **EP 1 078 566 B1**
(45) Veröffentlichungstag und Bekanntmachung des Hinweises auf die Patenterteilung: **05.11.2003**
(21) Anmeldenummer: 00116994.5
(22) Anmeldetag: 08.08.2000
(51) Int. Cl.: A01D 41/12, A01F 12/40

(54) **Leitblech für einen Strohverteiler**
Deflector for a straw spreader
Déflecteur pour un distributeur de paille

(30) Priorität: 26.08.1999 DE 19940555
(43) Veröffentlichungstag der Anmeldung: 28.02.2001
(73) Patentinhaber: DEERE & COMPANY, Moline, Illinois 61265-8098 (US)
(72) Erfinder: Braunhardt, Klaus, 66482 Zweibrücken (DE); Pfeiffer, Dohn, Davenport, IA 52807 (US)
(74) Vertreter: Holst, Sönke, Dr.

(56) Entgegenhaltungen:
- EP-A- 0 576 737
- DE-A- 2 805 208
- DE-A- 4 313 841

## Beschreibung

Die Erfindung betrifft ein Leitblech für einen Strohverteiler, mit wenigstens einem Diffusor, der eine von der Oberfläche des Leitblechs beabstandete Oberfläche aufweist.

Es sind Diffusoren bekannt, die an gekrümmten Leitblechen eines Auswurfgehäuses eines Mähdreschers stromab eines Strohhäckslers angebracht sind und den Materialstrom des gehäckselten Strohs aufreißen, um eine gleichmäßige Verteilung des Strohs auf dem Erdboden zu erzielen.

Derartige Diffusoren bestehen im Stande der Technik aus Zinken oder Blechstreifen, die am Ende der Leitbleche in den Materialfluß hineinragen und so den Strahl aufreißen. Es werden also separate Elemente an den Leitblechen angebracht. Als nachteilig ist dabei insbesondere der relativ große Herstellungsaufwand anzusehen.

Das der Erfindung zugrunde liegende Problem wird darin gesehen, ein preiswert herstellbares Leitblech bereitzustellen, das eine gleichmäßige Verteilung des Förderguts ermöglicht.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Kerngedanke besteht darin, den Diffusor einteilig mit dem Leitblech herzustellen, also aus einem einzigen Materialstück zu fertigen. Es sind also keine separaten Elemente als Diffusor mehr am Leitblech anzubringen, was die Fertigung entscheidend vereinfacht. Außerdem ist nicht zu befürchten, daß sich der Diffusor - insbesondere bei fehlerhafter Fertigung - vom Leitblech lösen kann.

Die Vorteile der Erfindung bestehen insbesondere darin, daß auf einfache und preiswerte Weise eine gleichmäßige seitliche Verteilung des Förderguts erzielt wird.

In der Regel ist das Leitblech gekrümmt, um das vom Strohhäcksler eintreffende Fördergut effektiv in seitlicher Richtung abzulenken, obwohl prinzipiell auch flache Leitbleche denkbar wären (deren Krümmungsradius unendlich ist). Dabei ist zu berücksichtigen, daß die Breite des Arbeitskanals des Strohhäckslers wesentlich kleiner als die erwünschte Streubreite ist.

Es bietet sich an, den Diffusor ebenfalls zu krümmen, und zwar mit einem Radius, der vom Krümmungsradius des Leitblechs abweicht. In der Regel wird der Krümmungsradius des Diffusors kleiner als der des Leitblechs sein. Möglich wäre auch ein Krümmungsradius des Diffusors, der den des Leitblechs übersteigt; dabei ist aber zu berücksichtigen, daß sich der Diffusor nicht im Schattenbereich des Leitblechs befinden sollte, da er dort wirkungslos ist.

Die Herstellung des erfindungsgemäßen Leitblechs kann auf verschiedene Arten erfolgen. Zum einen kann eine Trennungslinie zwischen Diffusor und Leitblech eingebracht werden, beispielsweise durch Sägen oder Stanzen. Das Material des Leitblechs, das den Diffusor bilden soll, kann dann verformt werden, z. B. durch Verbiegen. Im Ergebnis ist der Diffusor auf einfache Weise hergestellt.

Zum anderen kann auch eine spanlose Herstellung des Diffusors durchgeführt werden, so daß zwischen dem Diffusor und dem Leitblech noch Material des Leitblechs vorhanden ist. Dafür kommt insbesondere das Tiefziehen in Betracht. Ein Vorteil besteht darin, daß mittels einer geeigneten Form in einem einzigen Arbeitsgang auch die Krümmung des Leitblechs erzeugt werden kann.

Es bietet sich insbesondere an, den Diffusor sich in der Längsrichtung des Leitblechs erstrecken zu lassen, so daß er in der Förderrichtung des zu streuenden Materialstroms verläuft und effektiv wirken kann.

Um eine Variation des Abstands zwischen dem Austritt des Strohhäckslers und dem stromab gelegenen Ende des Leitblechs - und somit des Winkels, um den das Fördergut durch ein gekrümmtes Leitblech abgelenkt wird - zu erreichen, kann dieses Ende des Leitblechs insbesondere schräg und/oder (treppenförmig) abgestuft gegenüber der Durchflußrichtung des Materials verlaufen. Die Schrägung hat den Vorteil einer kontinuierlichen Streuung, während Stufen den Strom des Förderguts in diskrete Winkel streuen. Sind die Stufen jedoch klein genug gewählt, dürfte eine hinreichend gleichmäßige Verteilung des Fördergutes gewährleistet sein. Der Winkel einer Schrägung beträgt vorzugsweise etwa 45°.

In der Regel wird nicht nur ein einziges Leitblech, sondern eine Vielzahl an Leitblechen Verwendung finden. Es muß nicht unbedingt aus Metall sein, sondern auch Kunststoffmaterialien können Verwendung finden. Leitbleche aus Kunststoff können besonders einfach durch Pressen in einer entsprechenden Form gefertigt werden, wobei der Diffusor in demselben Arbeitsgang geformt werden kann.

Die Erfindung findet insbesondere an Strohverteilern von Erntemaschinen, wie Mähdreschern, Verwendung.

In den Zeichnungen sind nachfolgend näher beschriebene Ausführungsbeispiele der Erfindung schematisch dargestellt. Es zeigen:
- Fig. 1: eine Erntemaschine mit einer Verteilvorrichtung und einem Leitblech;
- Fig. 2: eine Ansicht einer ersten Ausführungsform eines Leitblechs;
- Fig. 3: eine Ansicht einer zweiten Ausführungsform eines Leitblechs;
- Fig. 4: eine Ansicht einer dritten Ausführungsform eines Leitblechs; und
- Fig. 5: eine Ansicht einer vierten Ausführungsform eines Leitblechs.

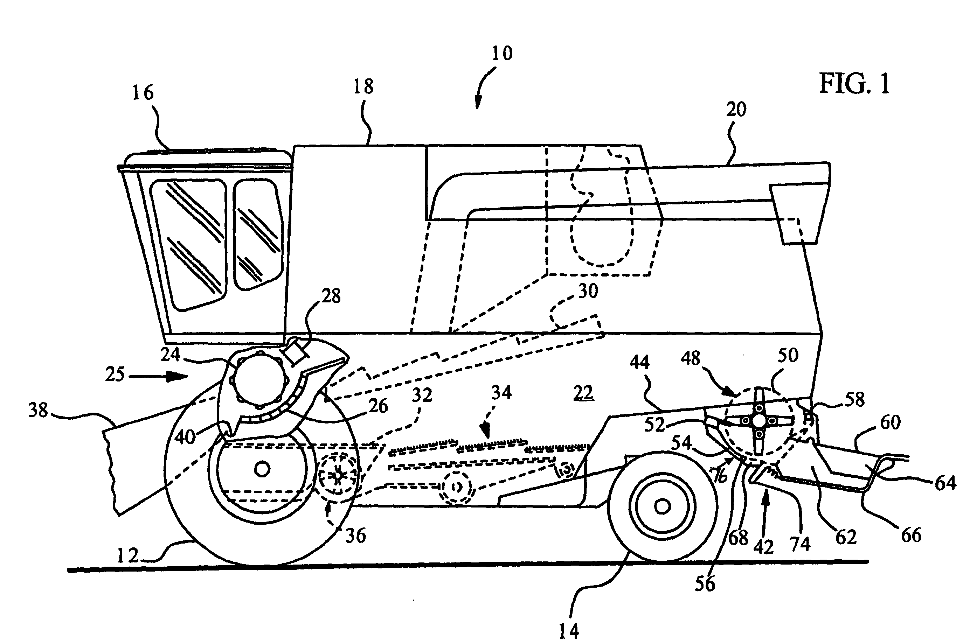

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 in eine Ausfallhaube 44 des Mähdreschers 10 gefördert werden und leichte Bestandteile mittels eines Gebläses 36 von den Sieben 34 auf den Erdboden geblasen werden. Auf dem Erdboden liegendes oder stehendes Erntegut wird über einen Schrägförderer 38 und eine Steinfangmulde 40 der Dreschtrommel 24 zugeführt, nachdem es von einer nicht gezeigten Erntegutbergungsvorrichtung vom Erdboden aufgenommen worden ist. Anstelle der Schüttler 30 können auch eine oder mehrere rotierende Abscheidetrommeln vorgesehen sein.

Am hinteren Ende der Ausfallhaube 44 ist eine Verteil- und Zerkleinerungsvorrichtung 42 vorgesehen, in die die von den Schüttlern 30 geförderten Bestandteile des Ernteguts, wie z.B. Stroh, aufgrund der Einwirkung der Schwerkraft gelangen. Das im folgenden als Fördergut bezeichnete Erntegut, das in die Zerkleinerungs- und Verteilvorrichtung 42 gelangt, wird von einer schnell im Gegenuhrzeigersinn rotierenden Trommel 48 mit daran angebrachten Messern 50 erfaßt. Auf der Trommel 48 sind gleichmäßig über den Umfang verteilt mehrere Messer 50 beweglich angeordnet. Das Fördergut wird von der Trommel 48 und den Messern 50 mitgenommen und an einer feststehenden Leiste mit Gegenmessern 52 vorbei gezogen. Durch die Messer 50 und die Gegenmesser 52 wird das Fördergut in kurze Abschnitte gehäckselt. Die Trommel 48 mit den Messern 50 wirkt im Ergebnis als Zerkleinerungs- und Förderelement. Es gibt auch Bauformen von Häckslern, bei denen anstelle der beweglichen Messer 50 auf der Trommel 48 nur feststehende Mitnehmerplatten angeordnet sind. Diese Mitnehmerplatten führen das Stroh durch feststehende Gegenmesser. Die erfindungsgemäße Lehre ist auch auf diese Bauformen anwendbar.

Das gehäckselte Fördergut wird durch einen engen Spalt zwischen den Messern 50 und einem ersten Bereich 54 des Gehäuses der Verteil- und Zerkleinerungsvorrichtung 42 in einer Kreisbahn geführt. Das Gehäuse ist an der Unterseite der Ausfallhaube 44 befestigt, und umschließt die Trommel 48. Der erste Bereich 54 des Gehäuses ist ortsfest an der Erntemaschine 10 angebracht. Das Fördergut wird anschließend durch die Trommel 50 an einem zweiten Bereich 68 des Gehäuses 76 vorbeigeführt, der an einer ersten, zur Zeichenebene orthogonalen Achse 56 schwenkbar am Gehäuse 76 angelenkt ist. Der erste Bereich 54 und der zweite Bereich 68 bilden einen sogenannten Häckslerboden, an dessen Ende das Fördergut die Kreisbahn verläßt und nach hinten auf den Erdboden ausgeworfen wird. Der zweite Bereich 68 des Gehäuses ist ein flaches Blech, das sich über die gesamte wirksame Breite der Verteilund Zerkleinerungsvorrichtung 42 erstreckt. Die Hauptmenge des Förderguts verläßt die Kreisbahn am Ende des zweiten Bereichs 68 tangential. Ein Teil wird aber durch die Messer 50 und die durch ihre Rotation resultierende Ventilation weiter herumgerissen. Es ergibt sich somit eine gewisse vertikale Streuung in der horizontalen Auswurfrichtung.

Am hinteren Ende der Zerkleinerungs- und Verteilvorrichtung 42 ist ein sogenannter Strohverteiler 62 angeordnet. Durch ihn soll das gehäckselte Fördergut möglichst gleichmäßig auf die Schnittbreite der Erntemaschine 10 quer zur Fahrtrichtung verteilt werden. Der Strohverteiler 62 weist ein um eine horizontale, senkrecht zur Zeichenebene verlaufende Achse 58, die im folgenden als zweite Achse bezeichnet wird, schwenkbares Bodenblech 60 auf. Die Neigung des gesamten Strohverteilers 62 relativ zum Erdboden kann so eingestellt werden. Unterhalb des Bodenblechs 60 ist eine Anzahl von Leitblechen 64 angeordnet. Die Leitbleche 64 sind längliche, sich senkrecht zum Bodenblech 60 nach unten erstreckende Bleche, die eine bezüglich der Fahrtrichtung der Erntemaschine 10 nach rechts oder nach links gerichtete Krümmung aufweisen. Zusätzlich können die Leitbleche 64 in ihrer Position quer zur Fahrtrichtung der Erntemaschine 10 verstellt werden. Durch die Krümmung und die Orientierung wird das Fördergut beim Passieren der Leitbleche 64 quer zur Fahrtrichtung der Erntemaschine 10 abgelenkt und so über eine größere Breite als die, die dem Arbeitskanal der Erntemaschine 10 entspricht, auf dem Boden verteilt.

Es ist eine Kopplung der Winkel des zweiten Bereichs 68 und des Strohverteilers 62 vorgesehen. An einem seitlichen Ende (oder beiden Enden) des zweiten Bereichs 68 sind unterseitig Hebel 74 angebracht. Außerdem sind (in Vorwärts-Fahrtrichtung der Erntemaschine 10) hinter den Hebeln 74 mehrere Aussparungen an der Unterseite des zweiten Bereichs 68 vorgesehen. Die Aussparungen sind kammartig in die Unterseite des zweiten Bereichs 68 eingebracht und weisen jeweils unterschiedliche Abstände von der ersten Achse 56 auf. Die Tiefe der Aussparungen ist ebenfalls jeweils unterschiedlich, um die Neigung des zweiten Bereichs 68 in die gewünschte Stellung zu bringen. Jeweils eine dieser Aussparungen nimmt eine Querstange auf, die über eine Stange 66 mit dem Bodenblech des Strohverteilers 62 verbunden ist. Mit der Auswahl der jeweils mit der Querstange in Eingriff gebrachten Aussparung wird die Neigung des Strohverteilers 62 festgelegt. Gleichzeitig wird dabei die Neigung des zweiten Bereichs 68 des Gehäuses und damit die horizontale Auswurfrichtung des gehäckselten Förderguts an die Strohverteilerneigung angepaßt, wobei vorteilhafterweise die gedachte Verlängerung der unteren Kante der Leitbleche 64 die Bewegungskreisbahn, die sich durch die Führung des Förderguts durch den ersten Bereich 54 und zweiten Bereich 68 ergibt, tangential berührt. Die Aussparungen sind derart angeordnet, daß der zweite Bereich 68 das Fördergut stets in den unteren Bereich der Leitbleche 64 richtet. Im Idealfall ist der zweite Bereich 68 parallel zum unteren Rand der Leitbleche 64 gerichtet.

Wie aus Figur 1 erkennbar ist, kann der Strohverteiler 62 um die zweite Achse 58 vertikal nach oben an die Rückwand der Erntemaschine 10 geschwenkt (und mit nicht in der Zeichnung dargestellten Mitteln dort arretiert) werden, so daß er z. B. beim Straßentransport der Erntemaschine 10 insbesondere mit angehängtem Schneidwerkswagen nicht stört.

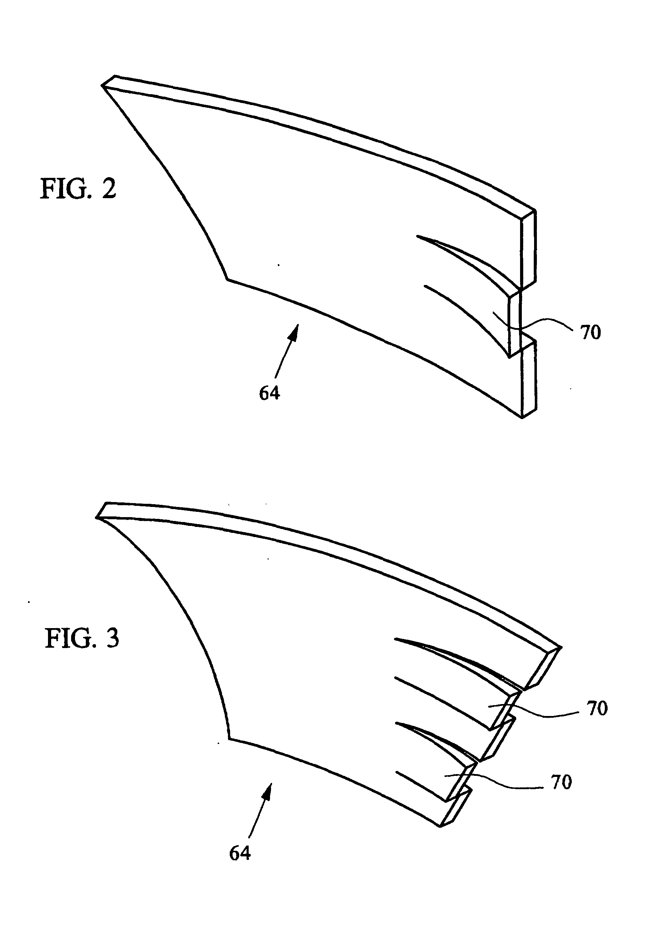

Die Leitbleche 64 besitzen eine Krümmung, die in den Figuren 2 bis 5 wiedergegeben ist. Das gehäckselte Fördergut wird entsprechend der Krümmung in einer Kurvenbahn geführt. Am Ende der Leitbleche 64 verläßt das Fördergut die Kurvenbahn tangential und wird so gegenüber der Fahrtrichtung der Erntemaschine 10 seitlich abgelenkt auf das Feld geworfen.

In Figur 2 ist eine erste Ausführungsform eines Leitblechs 64 dargestellt. Sein der Trommel 48 zugewandtes, stromauf gelegenes Ende ist unter etwa 45° abgeschrägt, wobei die Oberseite des - an sich im wesentlichen flachen - Leitblechs 64 (in Strömungsrichtung des Förderguts betrachtet) länger als die Unterseite ist. Weiterhin ist am stromab gelegenen, quer zur Flußrichtung des Förderguts verlaufenden Ende des Leitblechs 64 ein Diffusor 70 angeordnet, der aus einem mit dem Leitblech 64 einteiligen Metallstreifen besteht. Der Diffusor 70 erstreckt sich in der Längsrichtung des Leitblechs 64, also parallel zur Flußrichtung des Förderguts. In Figur 2 ist er in Richtung der Krümmung des Leitblechs 64 nach innen gebogen; er hat somit einen kleineren Krümmungsradius als das Leitblech 64. Es wäre auch denkbar, ihn nach außen zu biegen, also mit einem größeren Krümmungsradius als das Leitblech 64 zu versehen. Die Herstellung des Diffusors 70 erfolgt durch entsprechendes Einsägen oder Stanzen des Leitblechs 64 und anschließendes Verbiegen des den Diffusor 70 bildenden Bereichs zwischen den Einschnitten. Der Diffusor 70 sorgt dafür, daß der Strahl des Förderguts aufgerissen und über einen weiten Bereich gestreut wird.

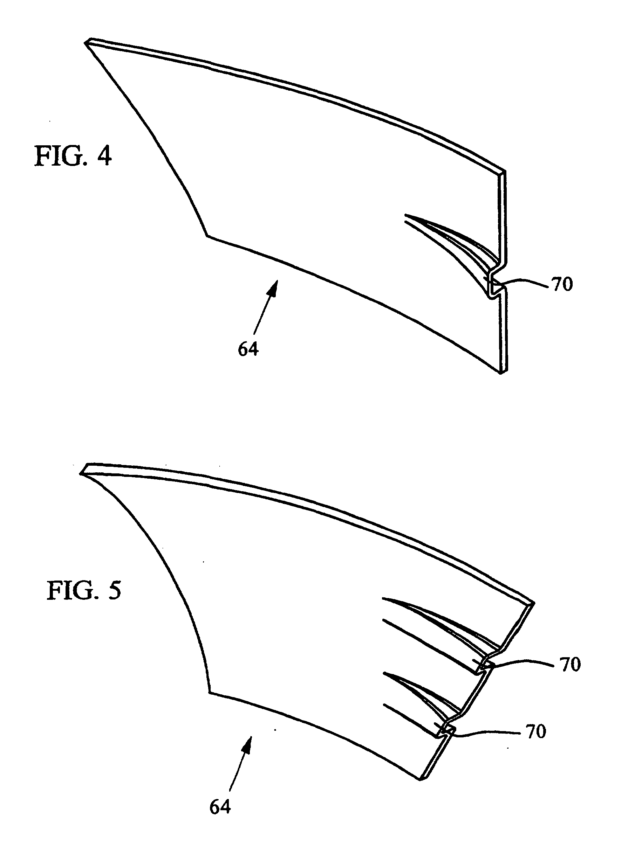

In Figur 3 ist eine zweite Ausführungsform eines Leitblechs 64 wiedergegeben. Es ist ebenfalls am der Trommel 48 zugewandten Ende um 45° abgeschrägt. Außerdem verläuft das stromab gelegene Ende des Leitblechs 64 (wie auch in den Figuren 4 und 5 dargestellt) schräg unter einem Winkel von etwa 45° gegenüber der Flußrichtung des Förderguts. Dadurch wird das Fördergut im oberen Bereich des Leitblechs 64 weiter (d.h. länger) in der Kurvenbahn geführt als im unteren. Da das Fördergut die Kurvenbahn unten früher verläßt als im oberen Bereich, wird es nicht so weit seitlich abgelenkt. Auf diese Weise verläßt das Fördergut die Leitbleche 64 ohne Energieverlust in einem bestimmten Streuwinkelbereich, und nicht als gebündelter Strahl. Die beschriebene Wirkung wird besonders gut erzielt, wenn das gehäckselte Fördergut möglichst quer zur Krümmung durch die Leitbleche 64 geführt wird. Auch das in Figur 2 gezeigte Leitblech ist mit Diffusoren 70 ausgestattet. Es sind zwei übereinander positionierte Diffusoren 70 vorhanden, die in ihrem grundsätzlichen Aufbau und ihrer Funktion mit dem in Figur 2 dargestellten Diffusor 70 übereinstimmen, sie sind jedoch entsprechend schmaler.

In Figur 4 ist ein Leitblech 64 nach einer dritten Ausführungsform der Erfindung wiedergegeben. Es ist ebenfalls an seinem stromab gelegenen Ende mit einem Diffusor 70 zur Streuung des Fördergutes ausgestattet, der mit dem Leitblech 64 einteilig ist. Der Diffusor 70 erstreckt sich parallel zur Flußrichtung des Förderguts und weist eine Oberfläche auf, die einen geringeren Krümmungsradius als das Leitblech 64 hat. Auch hier wäre denkbar, den Diffusor 70 nach außen zu formen, ihm also einen größeren Krümmungsradius als dem Leitblech 64 zu verleihen. Da der in Figur 4 dargestellte Diffusor 70 durch spanloses Verformen hergestellt ist, sind ober- und unterhalb des Diffusors 70 Materialbereiche vorhanden, die ihn mit dem Leitblech 64 verbinden. Es ist also im Unterschied zur ersten und zweiten Ausführungsform kein Spalt zwischen Diffusor 70 und Leitblech 64 vorhanden. Die Herstellung des Diffusors 70 kann durch spanlose Verformung des Leitblechs mittels einer Presse odgl., also beispielsweise durch Tiefziehen erfolgen, was den Vorteil hat, daß nur ein einziger Arbeitsgang zur Herstellung des Diffusors 70 erforderlich ist. Der Diffusor 70 kann durch geeignete Tiefziehformen auch schon beim Formen der Krümmung des Leitblechs 64 mit erzeugt werden.

In der vierten Ausführungsform, die in Figur 5 dargestellt ist, sind zwei übereinander angeordnete Diffusoren 70 mit dem Leitblech einteilig ausgeformt. Sie verlaufen parallel zueinander und zur Flußrichtung des Förderguts und zur Oberseite des Leitblechs 64. Sie entsprechen in ihrem grundsätzlichen Aufbau und ihrer Funktion dem in Figur 4 gezeigten Diffusor, sind nur entsprechend schmaler.

## Patentansprüche

1. Leitblech (64) für einen Strohverteiler (62), mit wenigstens einem Diffusor (70), der eine von der Oberfläche des Leitblechs (64) beabstandete Oberfläche aufweist, **dadurch gekennzeichnet, daß** der Diffusor (70) mit dem Leitblech (64) einteilig ist.

2. Leitblech (64) nach Anspruch 1, **dadurch gekennzeichnet, daß** das Leitblech (64) gekrümmt ist.

3. Leitblech (64) nach Anspruch 1 oder 2, **dadurch gekennzeichnet, daß** der Diffusor (70) einen vom Krümmungsradius des Leitblechs (70) abweichenden Krümmungsradius aufweist.

4. Leitblech (64) nach einem der Ansprüche 1 bis 3, **dadurch gekennzeichnet, daß** das Leitblech (64) und der Diffusor (70) durch wenigstens eine Trennungslinie voneinander getrennt sind.

5. Leitblech (64) nach Anspruch 4, **dadurch gekennzeichnet, daß** der Diffusor (70) durch Einbringen wenigstens einer Trennungslinie in das Leitblech (64) und Verformen, insbesondere Verbiegen, des Materials des Leitblechs (64) auf einer Seite der Trennungslinie hergestellt ist.

6. Leitblech (64) nach einem der Ansprüche 1 bis 4, **dadurch gekennzeichnet, daß** der Diffusor (70) durch spanloses Verformen des Materials des Leitblechs (64) hergestellt ist.

7. Leitblech (64) nach Anspruch 6, **dadurch gekennzeichnet, daß** zwischen dem Diffusor (70) und dem Leitblech (64) Material des Leitblechs vorhanden ist.

8. Leitblech (64) nach einem der Ansprüche 1 bis 7, **dadurch gekennzeichnet, daß** sich der Diffusor (70) in Längsrichtung des Leitblechs (64) erstreckt.

9. Leitblech (64) nach einem der vorhergehenden Ansprüche, **dadurch gekennzeichnet, daß** das stromabwärts gelegene Ende des Leitblechs (64) abgeschrägt ist.

10. Strohverteiler (62) mit einem daran befestigten Leitblech (64) nach einem der vorhergehenden Ansprüche.

11. Mähdrescher (10) mit einem Strohverteiler (62) nach Anspruch 10.

## Claims

1. A guide plate (64) for a straw spreader (62), comprising at least one diffuser (70) having a surface spaced from the surface of the guide plate (64), **characterized in that** the diffuser (70) is unitary with the guide plate (64).

2. A guide plate (64) according to claim 1, **characterized in that** the guide plate (64) is curved.

3. A guide plate (64) according to claim 1 or 2, **characterized in that** the diffuser (70) has a curve radius different from the curve radius of the guide plate (70).

4. A guide plate (64) according to one of claims 1 to 3, **characterized in that** the guide plate (64) and the diffuser (70) are separated by at least one separation line.

5. A guide plate (64) according to claim 4, **characterized in that** the diffuser (70) is produced by introducing at least one separation line into the guide plate (64) and shaping, especially bending, the material of the guide plate (64) on one side of the separation line.

6. A guide plate (64) according to one of claims 1 to 4, **characterized in that** the diffuser (70) is produced by a shaving-less forming of the material of the guide plate (64).

7. A guide plate (64) according to claim 6, **characterized in that** material of the guide plate is between the diffuser (70) and the guide plate (64).

8. A guide plate (64) according to one claims 1 to 7, **characterized in that** the diffuser (70) extends in the length direction of the guide plate (64).

9. A guide plate (64) according to one of the preceding claims, **characterized in that** the downstream end of the guide plate (64) is inclined.

10. A straw spreader (62) with a guide plate (64) according to one of the preceding claims mounted thereon.

11. A combine (10) with a straw spreader according to claim 10.

## Revendications

1. Déflecteur (64) pour un distributeur de paille (62), avec au moins un diffuseur (70), qui présente une surface écartée de la surface du déflecteur (64), **caractérisé en ce que** le diffuseur (70) forme une seule pièce avec le déflecteur (64).

2. Déflecteur (64) suivant la revendication 1, **caractérisé en ce que** le déflecteur (64) est recourbé.

3. Déflecteur (64) suivant la revendication 1 ou 2, **caractérisé en ce que** le diffuseur (70) présente un rayon de courbure différent du rayon de courbure du déflecteur (70).

4. Déflecteur (64) suivant l'une des revendications 1 à 3, **caractérisé en ce que** le déflecteur (64) et le diffuseur (70) sont séparés l'un de l'autre par au moins une ligne de séparation.

5. Déflecteur (64) suivant la revendication 4, **caractérisé en ce que** le diffuseur (70) est fabriqué par introduction d'au moins une ligne de séparation dans le déflecteur (64) et déformation, en particulier par pliage, du matériau du déflecteur (64) d'un côté de la ligne de séparation.

6. Déflecteur (64) suivant l'une des revendications 1 à 4, **caractérisé en ce que** le diffuseur (70) est fabriqué par déformation sans enlèvement de copeaux du matériau du déflecteur (64).

7. Déflecteur (64) suivant la revendication 6, **caractérisé en ce que** du matériau du déflecteur est présent entre le diffuseur (70) et le déflecteur (64).

8. Déflecteur (64) suivant l'une des revendications 1 à 7, **caractérisé en ce que** le diffuseur (70) s'étend en direction longitudinale du déflecteur (64).

9. Déflecteur (64) suivant l'une des revendications précédentes, **caractérisé en ce que** l'extrémité aval du déflecteur (64) est biseautée.

10. Distributeur de paille (62) auquel est fixé un déflecteur (64) suivant l'une des revendications précédentes.

11. Moissonneuse-batteuse (10) avec un distributeur de paille (62) suivant la revendication 10.
